# EUROPÄISCHE PATENTSCHRIFT

(11) **EP 0 755 809 B1**
(45) Veröffentlichungstag und Bekanntmachung des Hinweises auf die Patenterteilung: **18.08.1999**
(21) Anmeldenummer: 96890108.2
(22) Anmeldetag: 21.06.1996
(51) Int. Cl.: B60C 11/04, B60C 11/03

(54) **Fahrzeugreifen**
Vehicle tyre
Bandage pour véhicules

(30) Priorität: 27.07.1995 AT 128195
(43) Veröffentlichungstag der Anmeldung: 29.01.1997
(73) Patentinhaber: Semperit Reifen Aktiengesellschaft, A-2514 Traiskirchen (AT)
(72) Erfinder: Zeiner, Paul D.I., 3001 Mauerbach (AT); Arendt, Gernot D.I., 2512 Tribuswinkel (AT)
(74) Vertreter: Vinazzer, Edith, Dipl.-Ing.

(56) Entgegenhaltungen:
- EP-A- 0 089 307
- EP-A- 0 565 270
- EP-A- 0 588 781
- PATENT ABSTRACTS OF JAPAN vol. 018, no. 192 (M-1587), 4.April 1994 & JP 06 001118 A (SUMITOMO RUBBER IND LTD), 11.Januar 1994,
- PATENT ABSTRACTS OF JAPAN vol. 014, no. 140 (M-0950), 16.März 1990 & JP 02 006204 A (YOKOHAMA RUBBER CO LTD:THE), 10.Januar 1990,

## Beschreibung

Die vorliegende Erfindung betrifft einen Fahrzeugreifen mit einem Laufstreifenprofil, welches, über seine Breite in der Bodenaufstandsfläche betrachtet, einen Mittelbereich und zwei Seitenbereiche aufweist, die jeweils insbesondere über ein Drittel der Laufstreifenbreite verlaufen, wobei im Mittelbereich des Laufstreifenprofiles drei insbesondere gerade umlaufende und breite Umfangsnuten angeordnet sind, welche zwei Mittelbänder voneinander trennen und in den Seitenbereichen jeweils eine Vielzahl von Querrillen verläuft, die den Seitenbereichen eine Blockstruktur verleiht.

Pkw-Reifen mit derartigen Laufstreifenprofilen sind in verschiedenen Ausführungsformen bekannt. Durch die in den Seitenbereichen in meist leicht geschwungener Form angeordneten Querrillen wird dort jeweils eine in Umfangsrichtung umlaufende Blockreihe gebildet. Dabei sorgen die im Mittelbereich des Laufstreifens verlaufenden Umfangsnuten gemeinsam mit den Querrillen für eine gute und rasche Wasserableitung. Ein Reifen gemäß dem Oberbegriff des Anspruchs 1 ist z.B. durch die EP-A-0588781 bekannt.

Die Erfindung hat sich nun die Aufgabe gestellt einen Reifen mit einem derartigen Laufstreifenprofil hinsichtlich Vorbeifahrgeräusch und Fahrzeuginnengeräusch zu verbessern bzw. zu optimieren, wobei diese Verbesserung nicht zu Lasten der anderen Reifeneigenschaften, wie Aquaplaningverhalten oder Fahrverhalten gehen soll.

Gelöst wird die gestellte Aufgabe erfindungsgemäß dadurch, daß die Quernuten in den Laufstreifenseitenbereichen einen im wesentlichen V-förmigen Verlauf mit zwei Quernutabschnitten aufweisen, wobei in Verlängerung der in die Umfangsnuten einmündenden Quernutabschnitte weitere Nuten verlaufen, die in den in Umfangsrichtung benachbarten anderen Quernutabschnitt einmünden.

Es hat sich herausgestellt, daß diese Maßnahmen deutlichen Einfluß auf Vorbeifahrgeräusch und Fahrzeuginnengeräusch nehmen. Dabei dürften vor allem die bogenförmig gekrümmten Einschnitte in den Mittelbändern einen gewissen Einfluß auf die Verminderung des Vorbeifahrgeräusches haben. Die durch die V-förmigen Quernuten und die weiteren Nuten gebildete Blockstruktur in den Seitenbereichen hat sich als besonders günstig für das Abrollgeräusch im Sinne eines merklichen "Verrauschens" herausgestellt und damit einen deutlichen positiven Effekt auf das Fahrzeuginnengeräusch gezeigt.

Gemäß einer bevorzugten Ausgestaltung der Erfindung schließen die Einschnitte im Bereich ihrer Einmündungen in die Umfangsnuten einen Winkel von 50 bis 90° und im Bereich ihrer geschlossenen Enden einen Winkel von 0 bis 20° mit der Mittelumfangslinie ein. Die somit relativ starke Krümmung der Einschnitte dürfte dazu mit beitragen, daß das Vorbeifahrgeräusch gegenüber Reifen mit gerade verlaufenden Einschnitten vermindert ist.

Nach einem weiteren Merkmal der Erfindung schließen die zu den Laufstreifenrändern zu verlaufenden Quernutabschnitte mit der Mittelumfangslinie einen Winkel von im wesentlichen 45 bis 75° und die in die Umfangsnuten einmündenden Quernutabschnitte mit der Mittelumfangslinie einen Winkel von im wesentlichen 105 bis 135° ein. Diese Winkelung zeigt neben der positiven Auswirkung auf das Abrollgeräusch auch positive Wirkung auf das Aquaplaningverhalten.

In diesem Zusammenhang ist es ferner von Vorteil, wenn die in die Umfangsnuten mündenden Quernutabschnitte jeweils gemeinsam mit den in ihrer Verlängerung verlaufenden Nuten entlang von kontinuierlich gekrümmten Kurven verlaufen.

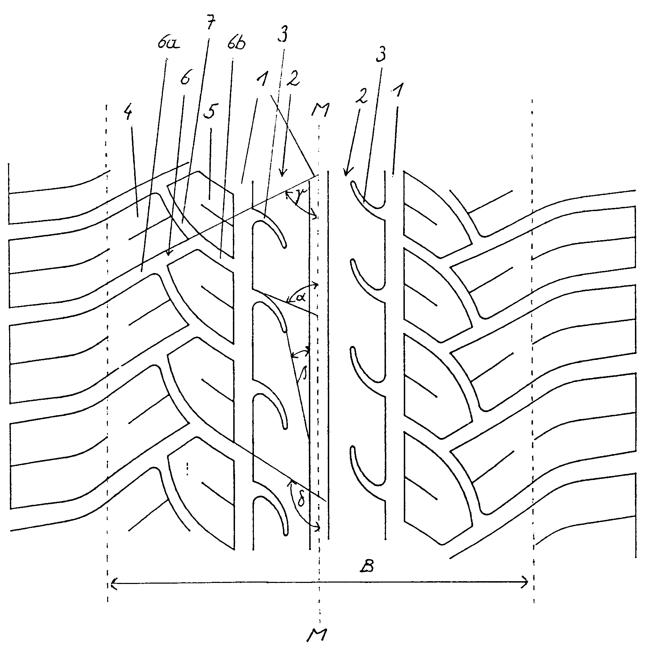

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur eine Draufsicht auf eine Teilabwicklung eines gemäß der Erfindung gestalteten Laufstreifenprofiles dargestellt.

Bei dem in der Zeichnungsfigur dargestellten Laufstreifenprofil handelt es sich um ein insbesondere für Pkw-Sommerreifen geeignetes Profil. Dabei wird in der nachfolgenden Beschreibung das Profil über seine Breite B, die der Breite in der Bodenaufstandsfläche (gemäß E.T.R.T.O.-Standards Manual) entspricht, betrachtet.

Wie aus der Zeichnungsfigur ersichtlich ist, besteht das Laufstreifenprofil aus einem Mittelbereich und zwei Seitenbereichen, die jeweils etwa ein Drittel der Laufstreifenbreite B einnehmen. Dabei sind im Mittelbereich des Laufstreifens drei in Reifenumfangsrichtung gerade umlaufende breite Umfangsnuten 1 angeordnet, von welchen die eine entlang der Mittelumfangslinie M-M des Profiles verläuft und die beiden weiteren in jeweils gleichem Abstand von dieser Mittelumfangslinie angeordnet sind. Die drei Umfangsnuten 1 schließen zwischen sich zwei Mittelbänder 2 ein, die mit sacknutartig endenden Einschnitten 3 versehen sind, die jeweils von den die Mittelbänder 2 laufstreifenaußenseitig begrenzenden Umfangsnuten in die Mittelbänder 2 hinein verlaufen und in einem Abstand von mindestens 20 % der Breite der Mittelbänder 2 vor der zentralen Umfangsnut 1 enden. Die Einschnitte 3 sind dabei derart bogenförmig gekrümmt, daß sie im Bereich ihrer Einmündung in die Umfangsnuten 1 einen Winkel α in der Größenordnung von 50 bis 90° mit der Mittelumfangslinie M-M einschließen, im Bereich ihrer geschlossenen Enden einen Winkel β von 0 bis 20°. Der Verlauf der bogenförmig gekrümmten Einschnitte 3 in dem einen Mittelband 2 ist dabei gegenläufig zu jenem der Einschnitte 3 im zweiten Mittelband 2. Die geschilderte Ausgestaltung des Laufstreifenprofiles mit zwei Mittelbändern und gekrümmten Einschnitten 3 hat sich als sehr günstig für eine Verminderung des Vorbeifahrgeräusches des mit einem solchen Profil versehenen Reifens herausgestellt.

Die beiden Seitenbereiche des Laufstreifenprofiles sind insbesondere hinsichtlich einer günstigen Beeinflussung des Reifen/Fahrbahngeräusches optimiert und setzen sich aus charakteristisch gestalteten Blöcken, 4, 5 zusammen. Diese charakteristische und erfindungsgemäße Struktur entsteht dadurch, daß von den Laufstreifenrändern bzw. Außenschulterbereichen aus Quernuten 6 mit einem V-förmigen Verlauf angeordnet sind, die sich somit aus einem Quernutabschnitt 6a und einem Quernutabschnitt 6b zusammensetzen. Die Quernutabschnitte 6a schließen dabei mit der Mittelumfangslinie M-M einen Winkel γ ein, der im Bereich zwischen 45 und 75°, insbesondere ca. 65°, beträgt, die Quernutabschnitte 6b schließen mit der Umfangsmittellinie einen Winkel δ ein, der im wesentlichen der zu dem Winkel γ supplementäre Winkel ist und somit zwischen 105 bis 135° beträgt. In Verlängerung der Quernutabschnitte 6b verlaufen weitere Nuten 7, so daß die erwähnte Blockstruktur mit Blöcken 3 und Blöcken 4 entsteht. Die Quernutabschnitte 6b sind dabei bevorzugt leicht bogenförmig gekrümmt, der gekrümmte Verlauf setzt sich in den weiteren Nuten 7 fort, so daß diese insgesamt einen Verlauf aufweisen, der von der Umfangsrichtung weniger abweicht als von der Querrichtung des Laufstreifenprofiles. Die Struktur in den beiden Seitenbereichen des Laufstreifenprofiles unterscheidet sich durch die jeweils gegenläufige Anordnung der Quernuten 6 und weiteren Nuten 7. Der V-förmige Verlauf der Quernuten 6 hat sich als besonders günstig für das Abrollgeräusch (Reilen/Fahrbahngeräusch) und zwar sowohl auf glatten als auch auf rauheren Fahrbahnen herausgestellt, indem ein breites Frequenzspektrum emmittiert wird, welches keine vorherrschenden Frequenzen besitzt.

Zur Geräuschopfimierung dieses Profiles trägt weiters bei, daß die Einmündungsbereiche der Einschnitte 5 in die Umfangsnuten 1 gegenüber den Einmündungsbereichen der Quernutabschnitte 6b in Umfangsrichtung versetzt sind.

Wie allgemein üblich sind auch bei diesem Laufstreifenprofil die Profilelemente (Blöcke 4, 5 und durch die Einschnitte 3 strukturierte Bänder 2) mit unterschiedlichen Umfangslängen (Pitchlängen), beim vorliegenden Ausführungsbeispiel in drei derartigen verschiedenen Pitchlängen, vorgesehen, deren günstige Aufeinanderfolge (Pitchfolge) mittels eines Rechenprogrammes optimiert ist.

Das erfindungsgemäße Laufstreifenprofil ist zwar insbesondere hinsichtlich des Reifenfahrbahngeräusches und Vorbeifahrgeräusches optimiert, weist jedoch auch ein sehr gutes Aquaplaningverhalten durch die Kombination von gerade verlaufenden Umfangsnuten mit schräg verlaufenden Quernuten auf. Auch im Fahrverhalten und Handling sind Reifen mit einem erfindungsgemäßen Laufstreifenprofil äußerst zufriedenstellend.

Die Erfindung ist auf das dargestellte Laufstreifenprofil nicht eingeschränkt So ist es ohne weiteres möglich, ein nach der Erfindung gestaltetes Profil auch laufrichtungsgebunden zu gestalten, indem die beiden Laufstreifenhälften, bevorzugt mit einem gegenseitigen Versatz in Umfangsrichtung, aber ansonsten spiegelbildlich zur Umfangsmittellinie ausgestaltet werden. Sämtliche erwähnten Profileigenschaften bleiben dadurch voll erhalten.

## Patentansprüche

1. Fahrzeugreifen mit einem Laufstreifenprofil, welches, über seine Breite in der Bodenaufstandsfläche betrachtet, einen Mittelbereich und zwei Seitenbereiche aufweist, die jeweils insbesondere über ein Drittel der Laufstreifenbreite verlaufen, wobei im Mittelbereich des Laufstreifenprofiles drei insbesondere gerade umlaufende und breite Umfangsnuten (1) angeordnet sind, welche zwei Mittelbänder (2) voneinander trennen und in den Seitenbereichen jeweils eine Vielzahl von Quernuten (6) verläuft, die den Seitenbereichen eine Blockstruktur verleiht, und wobei in die beiden Mittelbänder (2), jeweils von den die Mittelbänder (2) laufstreifenaußenseitig begrenzenden Umfangsnuten (1), sacknutartig endende Einschnitte (3) hineinverlaufen, die bogenförmig gekrümmt sind, dadurch gekennzeichnet, daß die Quernuten (6) in den Laufstreifensetenbereichen einen im wesentlichen V-förmigen Verlauf mit zwei Quernutabschntten (6a, 6b) aufweisen, wobei in Verlängerung der in die Umfangsnuten (1) einmündenden Quernutabschnitte (6b) weitere Nuten (7) verlaufen, die in den in Umfangsrichtung benachbarten anderen Quernutabschnitt (6a) einmünden.

2. Fahrzeugreifen nach Anspruch 1, dadurch gekennzeichnet, daß die Einschnitte (3) im Bereich ihrer Einmündungen in die Umfangsnuten (1) einen Winkel (α) von 50 bis 90° und im Bereich ihrer geschlossenen Enden einen Winkel (β) von 0 bis 20° mit der Mittelumfangslinie (M-M) einschließen.

3. Fahrzeugreifen nach Anspruch 1 oder Anspruch 2, dadurch gekennzeichnet, daß die Quernutabschnitte (6a) einen Winkel (γ) von im wesentlichen 45 bis 75° und die in die Umfangsnuten (1) einmündenden Quernutabschnitte (6b) einen Winkel (δ) von im wesentlichen 105 bis 135° mit der Mittelumfangslinie (M-M) einschließen.

4. Fahrzeugreifen nach einem der Ansprüche 1 bis 3, dadurch gekennzeichnet, daß die in die Umfangsnuten (1) mündenden Quernutabschnitte (6b) jeweils gemeinsam mit den in ihrer Verlängerung verlaufenden weiteren Nutetn (7) entlang von kontinuierlich gekrümmten Kurven verlaufen.

5. Fahrzeugreifen nach einem der Ansprüche 1 bis 3, dadurch gekennzeichnet, daß in dem einen Laufstreifenseitenbereich die Quernuten (6), die weiteren Nuten (7) und die Einschnitte (3) gegenläufig zu jenen im anderen Laufstreifenseitenbereich angeordnet sind.

## Claims

1. Motor vehicle tyre with a running strip profile which, regarded across its width in the ground contact surface, has a central area and two side areas which extend respectively across a third of the running strip width especially, there being arranged in the central area of the running strip profile three especially circumferentially straight and wide circumferential grooves (1) which separate two central belts (2) from one another and in the side areas there being a multiplicity of transverse grooves (6) extending which impart a block structure to the side areas and there being incisions (3), ending like a blind groove, extending into the two central belts (2) from the circumferential grooves (1) respectively, delimiting the central belts (2) on the outer side of the running strip, said incisions being curved in an arc-shape, characterised in that the transverse grooves (6) have in the running strip side areas an essentially V-shaped course with two transverse groove sections (6a, 6b), further grooves (7) extending in an extension of the transverse groove sections (6b) opening out into the circumferential grooves (1).

2. Motor vehicle tyre according to claim 1, characterised in that the incisions (3) in the area of their opening out into the circumferential grooves (1) form an angle (α) of 50 to 90° and in the area of their closed ends forming an angle (β) of 0 to 20° with the central circumferential line (M-M).

3. Motor vehicle tyre according to claim 1 or claim 2, characterised in that the transverse groove sections (6a) form an angle (γ) of essentially 45 to 75° and the transverse groove sections (6b) opening out into the peripheral grooves (1) form an angle (δ) of essentially 105 to 135° with the central circumferential line (M-M).

4. Motor vehicle tyre according to one of the claims 1 to 3, characterised in that the transverse groove sections (6b) opening out into the circumferential grooves (1) extend respectively together with the further grooves (7) extending into the extension of said transverse groove sections along continuously curved curves.

5. Motor vehicle tyre according to one of the claims 1 to 3, characterised in that in one of the running strip side areas the transverse grooves (6), the further grooves (7) and the incisions (3) are arranged to run in an opposite direction to those in the other running strip side area.

## Revendications

1. Bandage pour véhicules muni d'un profil de bande de roulement qui, considéré sur sa largeur dans la surface de contact au sol, comprend une région centrale et deux régions latérales s'étendant respectivement, en particulier, sur un tiers de la largeur de la bande de roulement, trois gorges circonférentielles larges (1), s'etendant en particulier rectilignement et disposées dans la région centrale du profil de bande de roulement, séparant l'une de l'autre deux bandes centrales (2) ; une multitude de rainures transversales (6), s'étendant respectivement dans les régions latérales, conférant une structure de blocs auxdites régions latérales ; et des entailles (3) courbées en arc de cercle, s'achevant à la manière de rainures non débouchantes, s'engageant respectivement dans les deux bandes centrales (2) à partir des gorges circonférentielles (1) délimitant lesdites bandes centrales (2) à la face extérieure de la bande de roulement, caractérisé par le fait que les rainures transversales (6) présentent, dans les régions latérales de la bande de roulement, un tracé pour l'essentiel en V comprenant deux segments (6a, 6b), des rainures additionnelles (7), s'étendant dans le prolongement des segments (6b) des rainures transversales qui débouchent dans les gorges circonférentielles (1), débouchant dans l'autre segment (6a) de rainure transversale occupant une position voisine dans le sens périphérique.

2. Bandage pour véhicules selon la revendication 1, caractérisé par le fait que les entailles (3) décrivent, dans la région de leurs embouchures dans les gorges circonférentielles (1), un angle (α) de 50 à 90° et, dans la région de leurs extrémités fermées, un angle (β) de 0 à 20° avec la ligne périphérique médiane (M-M).

3. Bandage pour véhicules selon la revendication 1 ou la revendication 2, caractérisé par le fait que les segments (6a) des rainures transversales, et les segments (6b) desdites rainures transversales qui débouchent dans les gorges circonférentielles (1), décrivent respectivement, avec la ligne périphérique médiane (M-M), un angle (γ) mesurant pour l'essentiel de 45 à 75°, et un angle (δ) mesurant pour l'essentiel de 105 à 135°.

4. Bandage pour véhicules selon l'une des revendications 1 à 3, caractérisé par le fait que les segments (6b) des rainures transversales qui débouchent dans les gorges circonférentielles (1) s'étendent à chaque fois, conjointement aux rainures additionnelles (7) s'étendant dans leur prolongement, le long de courbes à allure continue.

5. Bandage pour véhicules selon l'une des revendications 1 à 3, caractérisé par le fait que, dans l'une des régions latérales de la bande de roulement, les rainures transversales (6), les rainures additionnelles (7) et les entailles (3) sont agencées en sens inverse de celles de l'autre région latérale de la bande de roulement.
